# FASCICULE DE BREVET EUROPEEN

(11) **EP 4 639 582 B1**
(45) Date de publication et mention de la délivrance du brevet: **23.09.2026**
(21) Numéro de dépôt: 23837969.7
(22) Date de dépôt: 20.12.2023
(51) Int. Cl.: G21C 1/08, G21C 1/09, G21C 13/028, G21C 15/12, G21C 15/26

(54) **RÉACTEUR NUCLÉAIRE À EAU PRESSURISÉE (REP) DE TYPE MODULAIRE (SMR) À PRESSURISEUR SANS ASPERSION D'EAU**
MODULAR AUFGEBAUTER DRUCKWASSERKERNREAKTOR (PRPR) MIT DRUCKHALTER OHNE WASSERBESPRÜHUNG
PRESSURIZED WATER NUCLEAR REACTOR (PWR) OF MODULAR (SMR) TYPE HAVING A PRESSURIZER WITHOUT WATER SPRINKLING

(30) Priorité: 20.12.2022 FR 2214009
(43) Date de publication de la demande: 29.10.2025
(73) Titulaire: Commissariat à l'Energie Atomique et aux Energies Alternatives, 75015 Paris (FR)
(72) Inventeur: MORIN, Franck, 13115 SAINT PAUL LEZ DURANCE (FR); LIEGEARD, Clément, 13115 SAINT PAUL LEZ DURANCE (FR); DROIN, Jean-Baptiste, 13115 SAINT PAUL LEZ DURANCE (FR)
(74) Mandataire: Ipsilon
(86) Numéro de dépôt international: PCT/EP2023/086948
(87) Numéro de publication internationale: WO 2024/133455

(56) Documents cités:
- EP-A1- 4 390 972
- DE-A1- 2 026 217
- US-A1- 2018 190 391

## Description

### Domaine technique

La présente invention concerne les réacteurs nucléaires à eau pressurisée, en particulier ceux du type réacteurs modulaires intégrés, dits de petite ou moyenne puissance ou SMR en anglais (acronyme de « Small Modular Reactor »).

L'invention a pour objectif de pallier un inconvénient majeur de complexité de fabrication, associée à un coût important, et de complexité de pilotage et d'exploitation d'un tel réacteur SMR, en particulier de son pressuriseur.

Par « réacteur SMR », on entend ici et dans le cadre de l'invention, le sens technologique usuel, à savoir un réacteur nucléaire à fission, de taille et puissance plus faibles que celles des réacteurs conventionnels REL, dont un bloc est fabriqué en usine et transporté sur un site d'implantation nucléaire pour y être installé.

Par « bloc réacteur», on entend ici et dans le cadre de l'invention, la cuve, dite cuve de réacteur ainsi que l'ensemble des composants et partie de circuit fluidique, notamment le cœur du réacteur créant de la chaleur par des réactions nucléaires de fission, qui est logé à l'intérieur de la cuve de réacteur.

Par « à vocation calogène », on entend ici et dans le cadre de l'invention, une installation nucléaire, une centrale nucléaire ou un réacteur nucléaire dont la puissance est dédiée majoritairement à la fourniture de chaleur. La puissance d'un réacteur à vocation calogène peut être à 100% pour fournir de la chaleur. Une faible part de sa puissance peut tout de même servir à fournir de l'électricité.

Par «à vocation électrogène », on entend ici et dans le cadre de l'invention, une installation nucléaire, une centrale nucléaire ou un réacteur nucléaire dont la puissance est dédiée majoritairement à la fourniture d'électricité. La puissance d'un réacteur à vocation électrogène peut être à 100% pour fournir de l'électricité. Une faible part de sa puissance peut tout de même servir à fournir de la chaleur.

### Technique antérieure

Une part importante du parc actuel des centrales nucléaires à réacteurs à eau pressurisée (REP) arrive bientôt en fin de sa période d'exploitation pour laquelle les réacteurs ont été conçus et licenciés, dans un contexte où la transition énergétique avec la décarbonation des usages va augmenter les besoins en électricité (électricité non intermittente, à haut taux de disponibilité et compétitive).

Les documents DE 20 26 217 A1 et US 2018/190391 A1 divulguent des exemples de REP de l'état de la technique.

Un réacteur nucléaire à eau pressurisée (REP) comprend trois cycles (circuits fluidiques) dont le principe général de fonctionnement normal est le suivant.

L'eau sous haute pression d'un circuit primaire, prélève l'énergie fournie, sous forme de chaleur, par la fission des noyaux d'uranium, et le cas échéant de plutonium, dans le cœur du réacteur.

Ensuite, cette eau sous haute pression et haute température, typiquement 155 bars et 300 °C, circule dans un générateur de vapeur (GV) où elle échange sa chaleur avec un circuit secondaire, lui aussi utilisant de l'eau sous pression comme fluide caloporteur. Cette eau sous forme de vapeur, à haute pression, typiquement à environ 70 bars, est ensuite détendue via un organe de détente transformant la variation d'enthalpie du fluide en travail mécanique puis électrique en présence d'une génératrice électrique.

L'eau du circuit secondaire, est ensuite condensée via un condenseur utilisant un troisième cycle, le cycle de refroidissement, comme source froide.

Les principes de conception des réacteurs REP selon ces trois cycles sont sensiblement les mêmes depuis le début de la mise en service des premiers exploités.

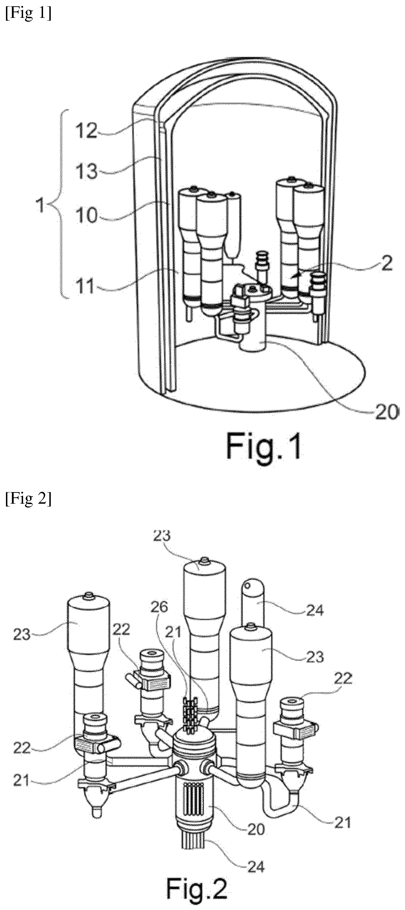

Les principaux éléments d'un circuit primaire de REP sont montrés à la figure 1 :
- un bâtiment réacteur 1 assurant différentes fonctions dont notamment une contribution à la fonction de sûreté de confinement,
- une cuve de réacteur 20, implantée au centre du bâtiment 1, logeant le cœur C du réacteur,
- un circuit primaire 2 en eau pressurisée comprenant la cuve 20.

Ces principaux éléments sont donc communs, leur constitution et le nombre de composants variant selon la puissance du réacteur.

Typiquement, l'enveloppe du bâtiment du réacteur 1 peut être constituée de plusieurs épaisseurs. Par exemple, comme illustré à la figure 1, un bâtiment du réacteur 1 peut être constitué d'une paroi extérieure en béton armé 12, d'une paroi intérieure en béton précontraint 10 séparée de la paroi extérieure 12 par un espace annulaire 13 dénué de matière, et d'une peau métallique 11 sur l'intérieur de la paroi en béton précontraint 10, pour un réacteur de 1650 MWe.

Comme illustré sur la figure 2, issue de la publication [1], le circuit primaire 2 est constitué des principaux composants suivants :
- une cuve de réacteur 20,
- des boucles primaires 21 comprenant chacune une pompe primaire 22 et un générateur de vapeur 23,
- un unique pressuriseur 24.

En outre, on distingue sur cette figure 2, les mécanismes de barres de contrôle du cœur de réacteur et de grappes de contrôle 25.

En fonction de la puissance du réacteur, le nombre de boucles peut être de trois pour un réacteur de 900MWe ou 4 pour un réacteur de 1300 MWe et plus.

Le bâtiment du réacteur 1 est donc dimensionné, entre autres, pour loger l'intégralité des composants du circuit primaire 2.

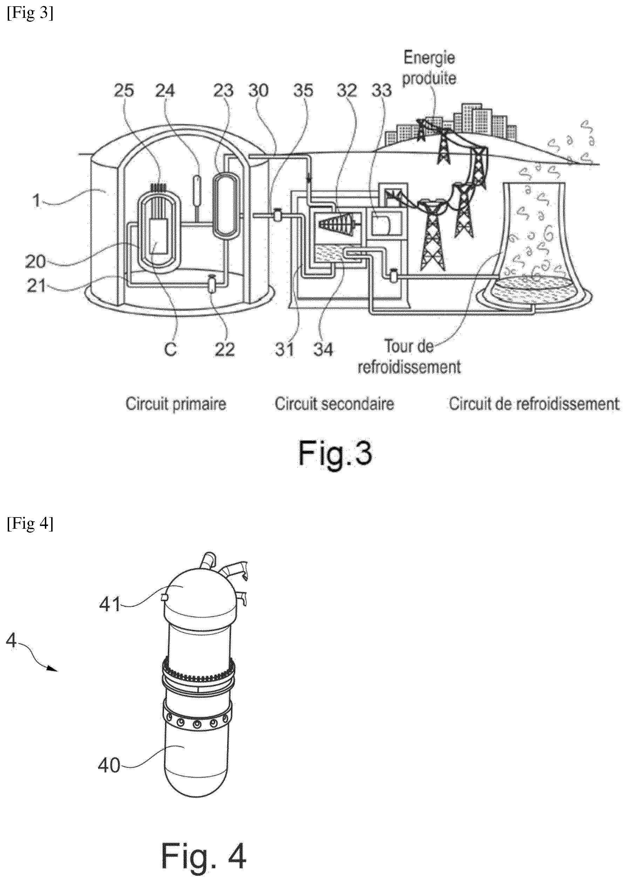

La figure 3 illustre le cycle de transfert d'énergie (chaleur puis électricité) d'un réacteur REP. Sur cette figure 3, on distingue notamment la répartition du positionnement des composants par rapport au bâtiment du réacteur 1, qui assure la fonction de troisième barrière de confinement.

Les liaisons fluidiques entre l'intérieur et l'extérieur du bâtiment du réacteur 1 sont assurées par les lignes 30, 31 du circuit externe des générateurs de vapeur 23 vers le circuit secondaire 3 comprenant une turbine 32 reliée au générateur électrique 33, un condenseur 34, une pompe alimentaire 35 et un réchauffeur non représenté.

Plus précisément, pour un générateur de vapeur 23 donné, le bâtiment du réacteur 1 est traversé par une ligne dite ligne chaude 30 qui évacue la vapeur du générateur de vapeur 23 pour extraire la puissance et l'amène jusqu'à la turbine 32, et par une ligne dite froide 31 qui alimente en eau liquide le générateur de vapeur 23.

Une technologie actuellement émergente est celle des réacteurs de petite puissance, désignés sous l'acronyme anglo-saxon SMR (« Small Modular Reactor »). Ces réacteurs SMR ont pour avantages primordiaux par rapport aux REP existants, de permettre une simplification des systèmes, principalement à des fins de sûreté, une capacité de modularité accrue par une fabrication importante des composants en usine pour un transport sur site de construction.

En outre, les SMR sont flexibles par leur faible niveau de puissance et par leur capacité d'insertion territoriale.

Ils apparaissent ainsi comme une solution d'avenir compétitive. A ce jour, environ 70 projets de SMR sont identifiés dans le monde à des stades plus ou moins avancés, dont un quart utilisent des filières technologiques matures, de génération 3 (Gen-III), comme celle du parc français.

Parmi les SMR en cours de développement, certains proposent une configuration basée sur l'intégration du générateur de vapeur, voire de tous les composants du circuit primaire notamment le pressuriseur et les pompes primaires, à l'intérieur de la cuve de réacteur. Ces SMR sont dénommés SMR intégrés.

Outre le gain de compacité, les SMR intégrés ont pour avantage de ne plus nécessiter de lignes fluidiques aériennes en eau pressurisée, à l'exception des lignes des circuits de contrôle de diamètre très limité, typiquement quelques cm, ce qui réduit considérablement les risques d'accident et conséquences associées liées à la rupture des lignes du circuit primaire.

A titre d'exemple, le projet de centrale nucléaire d'acronyme NUWARD^{™}, est une centrale constituée de deux SMR intégrés, de puissance unitaire égale à 170MWe, avec tous les composants du circuit primaire à l'intérieur de la cuve de réacteur.

D'autres projets de SMR intégrés sont en développement ou ont été étudiés, parmi lesquels on peut citer le projet SCOR d'une puissance de 150 à 200 MWe au nom de la Demanderesse ou le projet ACP100 de puissance égale à 100 MWe.

Le gain en compacité des SMR de type intégré complexifie les opérations en exploitation, comparativement à celles effectuées dans un REP usuel.

En effet, les principales opérations d'opérabilité et de maintenabilité structurantes sur l'architecture pour un circuit primaire de réacteur sont les suivantes:
- les opérations de chargement/déchargement du combustible qui nécessitent, dans des conditions de radioprotections adaptées, d'avoir accès à l'intérieur de la cuve du réacteur,
- les opérations de maintenance sur les équipements qui nécessitent de l'accessibilité aux équipements.

Si on se réfère à la figure 2, on voit que les boucles d'un circuit primaire 2 d'un REP usuel sont conçues pour permettre la maintenance sur chaque composant sans impacter, ou de manière très limitée, les autres composants et que les opérations de manutention du combustible se font par l'ouverture du couvercle de la cuve 20 sans impacter les boucles primaires 21.

A contrario, du fait de l'intégration des composants, dans un SMR intégré, l'accès à la zone des combustibles pour les opérations de chargement/déchargement peut requérir de déposer des parties fonctionnelles du circuit primaire, ce qui est plus conséquent que la manutention du couvercle de cuve.

On a représenté à la figure 4 un exemple de SMR intégré actuellement en projet. Un tel réacteur SMR intégré globalement désigné sous la référence 4 comprend un compartiment fixe 40 et un compartiment amovible 41 sous la forme d'un couvercle, pour les phases de manutention du combustible ou de maintenance des internes du réacteur.

Les inventeurs ont analysé que les réacteurs SMR intégrés tels qu'actuellement envisagés ont plusieurs inconvénients, plus particulièrement liés à la complexité de leur pressuriseur.

En effet, tout comme pour un réacteur REP classique, le pressuriseur d'un réacteur SMR intégré comprend une partie de chauffage électrique qui permet de produire de la vapeur d'eau et par-là, d'augmenter la pression régnant dans le pressuriseur, et une partie de refroidissement et de condensation de la vapeur qui entraîne une chute de la pression.

A ce jour, cette partie de refroidissement et de condensation de la vapeur est constituée par un dispositif d'aspersion/d'injection d'eau liquide par pompage, à partir d'un prélèvement du circuit primaire.

Outre la complexité de fabrication, de pilotage et d'exploitation inhérente à un tel dispositif d'aspersion au sein d'un réacteur SMR, les inventeurs ont fait le choix de ne pas agencer de groupe de pompage primaire dans la cuve de réacteur, comme proposé dans la demande de brevet déposée ce jour et intitulée *« Installation nucléaire comprenant au moins un réacteur nucléaire modulaire (SMR) et un puits de cuve délimitant un bassin d'eau dans lequel le réacteur SMR et les échangeurs entre circuits primaire et secondaire sont immergés ».*

Il existe donc un besoin pour trouver une solution qui permette de pallier les inconvénients précités liés à un dispositif d'aspersion/d'injection d'eau liquide en tant que partie de refroidissement et de condensation de la vapeur dans les réacteurs nucléaires à eau pressurisée (REP) de type SMR.

Le but de l'invention est de répondre au moins en partie à ce besoin.

### Exposé de l'invention

Pour ce faire, l'invention concerne, sous l'un de ses aspects, un réacteur à eau pressurisée (REP), de type réacteur modulaire (SMR) comprenant:
- une cuve de réacteur d'axe central (X) comprenant un couvercle sous la forme d'un dôme et logeant au moins une partie du circuit primaire ;
- un pressuriseur du circuit primaire dont la partie de refroidissement et de condensation de la vapeur comprend:
   - deux parois du dôme, distantes l'une de l'autre en formant un espace (E) étanche par rapport au circuit primaire et à l'intérieur duquel peut circuler de l'eau de refroidissement sous forme liquide depuis le bas vers le haut du dôme formant une cheminée d'évacuation centrale vers l'extérieur de la cuve et du dôme, de sorte à condenser la vapeur à l'état de saturation du circuit primaire à l'intérieur de la cuve et ainsi diminuer la pression au sein de la cuve;
   - une vanne de régulation du débit d'eau liquide circulant dans l'espace, agencée dans la cheminée d'évacuation centrale.

Par « circuit primaire », on entend le sens usuel, à savoir le circuit de fluide qui évacue la chaleur dégagée dans le cœur du réacteur grâce à une circulation d'eau sous pression, dite eau ou réfrigérant primaire. La cuve de réacteur qui loge une partie du circuit primaire est la deuxième des trois barrières de confinement/sûreté qui empêche la dispersion des produits radioactifs.

Par « circuit secondaire », on entend soit le sens usuel d'un circuit fermé à boucle, soit un milieu ouvert comprenant un bassin d'eau secondaire, contenu dans l'espace du puits de cuve réacteur formant la troisième barrière de confinement.

De préférence, les deux parois du dôme sont métalliques, de préférence encore en acier inoxydable.

Selon une variante de réalisation avantageuse, la paroi interne forme l'enceinte de résistance mécanique à la pression du circuit primaire. De préférence, l'épaisseur de la paroi interne est comprise entre 10 et 20 mm.

Selon un mode de réalisation avantageux, le réacteur comprend un dissipateur thermique passif agencé à l'intérieur du dôme pour refroidir la vapeur du circuit primaire.

Selon ce mode, et une variante de réalisation avantageuse, le dissipateur thermique comprend une pluralité d'ailettes de refroidissement agencées à l'intérieur de la paroi interne, en étant réparties de préférence uniformément sur la surface de cette dernière.

Avantageusement, les ailettes sont soudées ou brasées à la paroi interne.

De préférence, l'espace entre paroi interne et externe est compris entre 0,5 et 5 cm.

Selon un autre mode de réalisation avantageux, la paroi externe du dôme est recouverte d'une coiffe logeant en son sein un isolant thermique.

De préférence, l'eau liquide du pressuriseur destinée à circuler entre les deux parois du dôme est inférieure d'au moins 10°C à la température d'eau liquide du circuit primaire.

Selon une autre variante de réalisation avantageuse, la partie de chauffage du pressuriseur comprend une pluralité de résistances électriques enveloppées dans un isolant électrique, agencées à l'intérieur du dôme.

Selon une configuration avantageuse, l'eau liquide du pressuriseur destinée à circuler entre les deux parois du dôme est l'eau du circuit secondaire du réacteur.

Selon un mode de réalisation avantageux, le circuit secondaire comprend un bassin rempli d'eau, contenu dans l'espace du puits de la cuve de réacteur et alimentant le bas de l'espace entre les parois du dôme.

Selon ce mode, et une variante de réalisation avantageuse, le bassin d'eau est configuré pour, lorsque le réacteur SMR est en fonctionnement normal, réaliser une stratification thermique verticale entraînant la formation d'une thermocline délimitée entre le bas du bassin à une température dite froide dans lequel la cuve de réacteur SMR est immergé et le haut du bassin à une température dite chaude, la thermocline étant positionnée au-dessus du dôme de sorte que la circulation de l'eau liquide depuis le bassin dans l'espace entre parois du pressuriseur est réalisée par convection naturelle.

L'invention a encore pour objet une installation nucléaire comprenant au moins un réacteur nucléaire SMR tel que décrit précédemment.

Ainsi, l'invention consiste essentiellement en un pressuriseur dont la partie de refroidissement et de condensation de vapeur est intégrée directement dans le couvercle sous la forme d'un dôme à double-paroi à l'intérieur de laquelle peut circuler de manière étanche par rapport au circuit primaire, de préférence par convection naturelle, de l'eau liquide depuis le bas vers le haut du dôme pour être évacuée à travers une cheminée centrale logeant une vanne de régulation du débit de l'eau circulant et donc le refroidissement de la vapeur d'eau primaire à l'intérieur du dôme.

Ainsi, l'eau de liquide circule dans un circuit indépendant, distinct du circuit d'eau primaire du réacteur, et qui est intégré dans le dôme de la cuve primaire.

Le refroidissement s'effectue donc par conduction thermique à travers la double-paroi du dôme et la température refroidie sur la paroi interne du dôme condense la vapeur d'eau primaire à l'intérieur du dôme, sans qu'il y ait besoin d'une aspersion ou injection d'eau comme selon l'état de l'art, qui plus est à partir d'un circuit d'eau liquide indépendant du circuit primaire.

Au final, le réacteur nucléaire avec un pressuriseur intégré au sein du couvercle de la cuve de réacteur selon l'invention présente de nombreux avantages parmi lesquels on peut citer :
la suppression des dispositifs d'aspersion/d'injection d'eau en tant que partie de refroidissement et condensation de la vapeur pour un pressuriseur de réacteur SMR intégré;
l'amélioration de la sûreté par un refroidissement efficace uniquement par convection naturelle ;
la simplification forte de la conception de réacteur SMR à fonction calogène ;
la forte réduction des coûts associés que ce soit pour les dépenses d'investissement (CAPEX) ou pour les dépenses d'exploitation (OPEX).

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective et en coupe partielle d'un réacteur nucléaire de type REP existant.
[Fig 2] la figure 2 est une vue schématique d'un circuit primaire de réacteur nucléaire de type REP selon l'état de l'art dans une configuration à trois boucles primaires.
[Fig 3] la figure 3 est une vue schématique des trois cycles d'un réacteur nucléaire de type REP selon l'état de l'art.
[Fig 4] la figure 4 est une vue schématique en perspective d'un réacteur SMR de type intégré tel qu'il est actuellement envisagé.
[Fig 5] la figure 5 est une vue schématique en perspective d'un réacteur SMR calogène qui intègre un pressuriseur selon l'invention.
[Fig 5A] la figure 5A est une vue éclatée en perspective des parties de la cuve réacteur SMR calogène selon l'invention.
[Fig 6] la figure 6 est une vue en coupe longitudinale du réacteur selon la figure 5, et qui illustre la circulation par convection naturelle de l'eau du circuit primaire et du circuit secondaire.
[Fig 6A] la figure 6A est une vue schématique de détail d'un ensemble de grappe de contrôle, la tige de commande, et le mécanisme de commande de barre d'un réacteur SMR calogène selon l'invention.
[Fig 7] [Fig 8] les figures 7 et 8 sont des vues de détail en perspective montrant la vanne de régulation du débit du circuit primaire respectivement dans une position intermédiaire et la position complètement ouverte.
[Fig 9] la figure 9 est une vue en perspective d'une partie du réacteur selon la figure 5, et qui montre en détail l'implantation d'une vanne de régulation du débit d'eau du circuit secondaire.

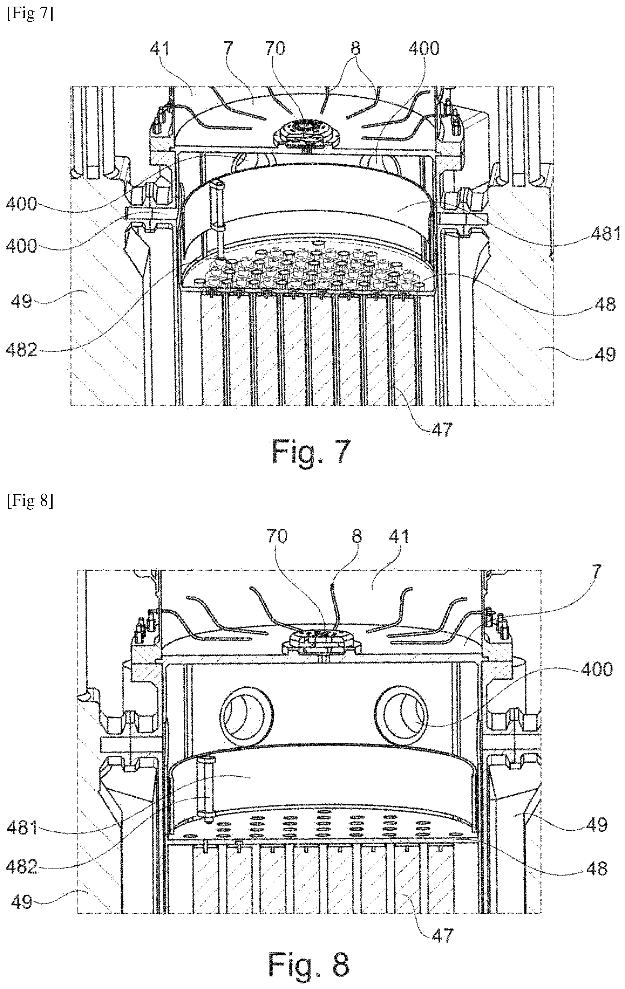

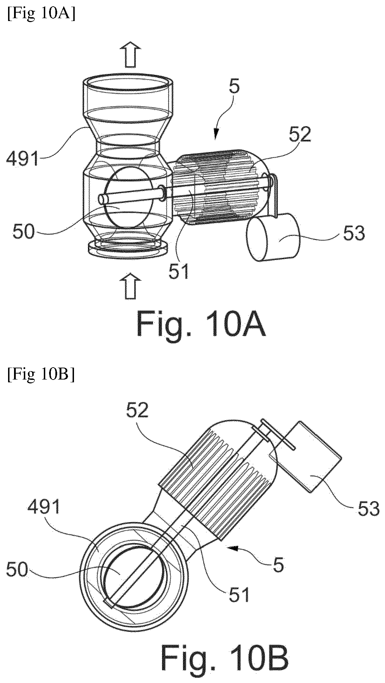

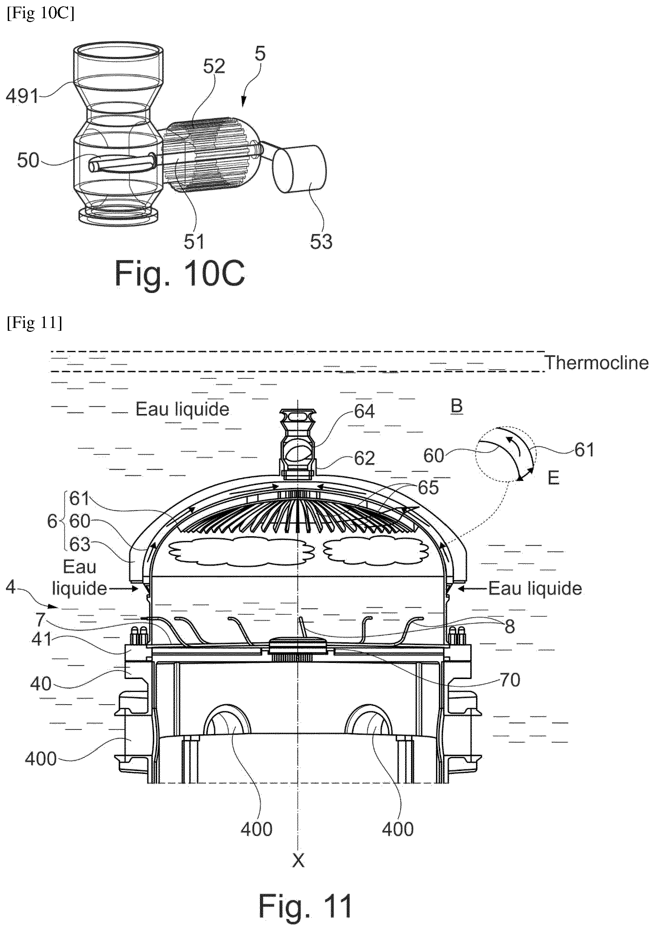

[Fig 8] [Fig 10A] [Fig 10B] [Fig 10C] les figures 10A, 10B et 10C sont des vues en perspective montrant un exemple de vanne de régulation du débit d'eau du circuit secondaire et son intégration dans un collecteur de sortie d'échangeur, la vanne étant respectivement dans la position complètement ouverte, une position intermédiaire et la position complètement fermée.

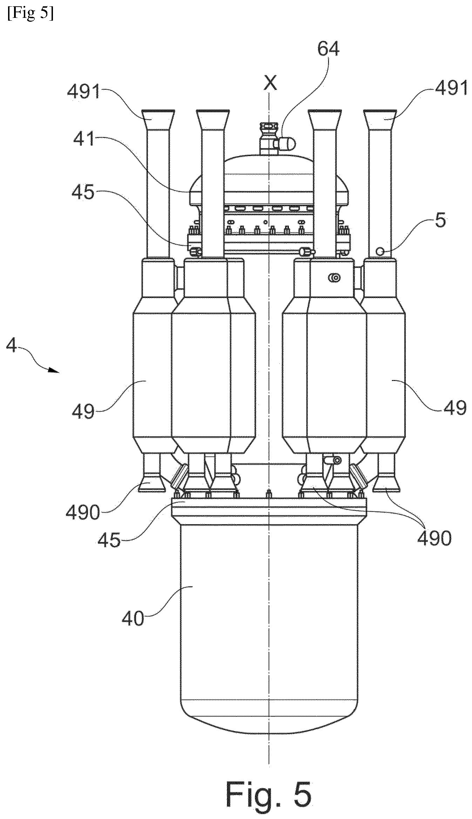

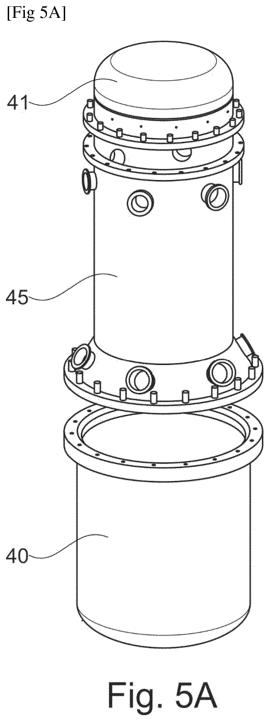

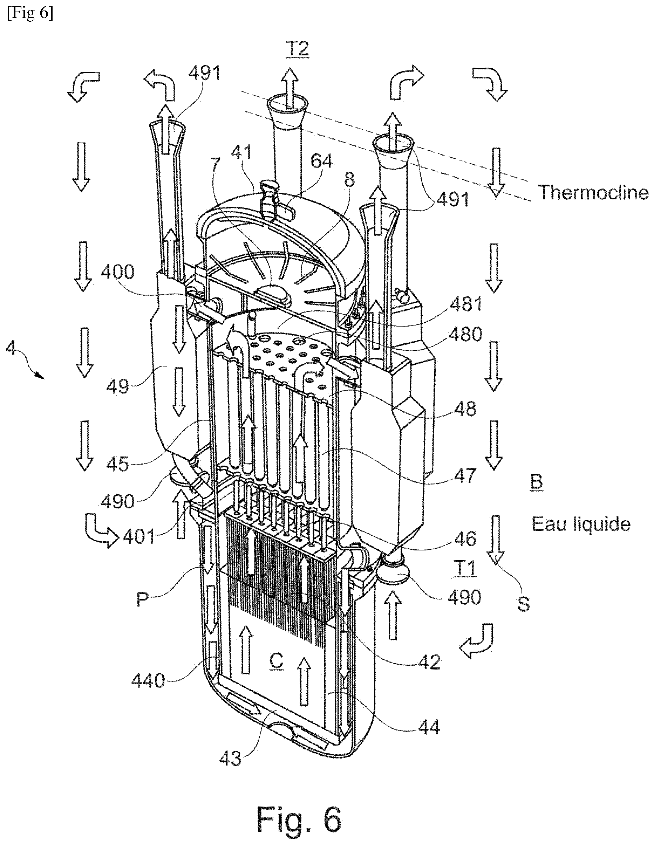

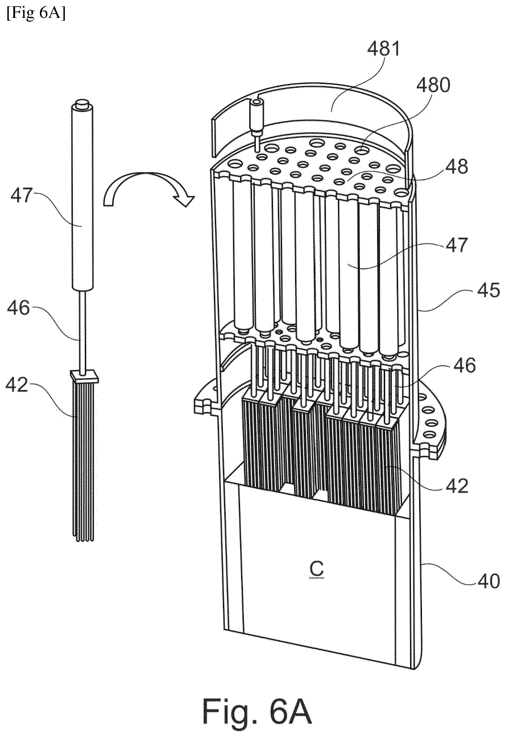

[Fig 11] la figure 11 est une vue partielle en coupe longitudinale de la partie supérieure d'un réacteur SMR selon les figures 5 et 6 montrant un pressuriseur selon l'invention.

### Description détaillée

Dans l'ensemble de la présente demande, les termes « vertical », « inférieur », « supérieur», « bas », « haut », « dessous » et « dessus » sont à comprendre par référence par rapport à un réacteur nucléaire SMR, tel qu'il est prévu en configuration verticale de fonctionnement et agencé dans un bassin d'eau selon l'invention.

Les figures 1 à 4 ont déjà été détaillées en préambule, elles ne seront donc pas commentées ci-après.

Par souci de clarté, un même élément selon l'invention et selon l'état de l'art est désigné par une même référence numérique dans l'ensemble des figures 1 à 11.

On décrit en référence à la figure 5, un réacteur nucléaire 4 de type à eau pressurisée, selon une configuration de circuit primaire de type SMR intégré, selon l'invention.

Ce réacteur 4 est d'une puissance unitaire de 20 MW thermique, à vocation calogène c'est-à-dire dédié à la fourniture d'eau chaude à 90°C. Sa puissance unitaire peut toutefois varier à la hausse ou à la baisse, dans une gamme d'environ 10 MWth à 100 MWth, et la température de fourniture d'eau chaude peut également évoluer jusqu'à environ 150°C.

Le réacteur 4 d'axe central X figure 5 comprend un bloc délimité par un corps de cuve 40, un corps intermédiaire 45, et un dôme 41 métallique en acier inoxydable préférentiellement, d'une épaisseur de l'ordre de 10 à 20 mm,et formée d'un fond de cuve hémisphérique et d'un cylindre vertical. Cette cuve de réacteur est constituée d'un compartiment fixe 40 et d'un compartiment amovible 45 et 41 comme indiqué figure 5A, au-dessus du cœur du réacteur pour les phases de manutention du combustible ou de maintenance des internes du réacteur. Le compartiment formé des corps 41 et 45 est amovible pour permettre la manutention des assemblages contenus dans le corps de cuve 40. Le compartiment amovible 41 est un couvercle sous la forme d'un dôme 6 dont la cheminée centrale intègre une vanne 64, adaptée pour le refroidissement du pressuriseur du réacteur comme détaillé par la suite.

Le cœur C du réacteur comprend un ensemble d'assemblages combustibles tels que ceux qu'on utilise classiquement dans les réacteurs de type REP mais avec une hauteur fissile adaptée pour obtenir la puissance thermique totale souhaitée. Chaque assemblage combustible possède plusieurs emplacements manquants de crayon combustible, remplacés par des crayons absorbants qui peuvent monter ou descendre dans l'assemblage pour le pilotage de la réaction et formant les barres de contrôle 42. Des données issues d'études préliminaires réalisées par la Demanderesse considèrent un nombre de 52 assemblages et une durée de cycle de 10 ans, avec une hauteur fissile de 1,5 m.

Le corps de cuve 40 loge dans sa partie basse un cylindre 43, supportant un panier d'assemblages usuellement désigné sous la dénomination « panier support cœur », dédié à la tenue des assemblages combustibles, et une enveloppe de séparation 40 avec son réflecteur neutronique périphérique 440 destiné à assurer le maintien du flux neutronique dans le cœur.

Un ensemble de brides est boulonné entre les compartiments fixe 40 et amovible 45, et le dôme 41. L'étanchéité entre les brides des compartiments 40 et 45 d'une part, 45 et 41 d'autre part, est avantageusement assurée par un joint métallique. Le démontage de la bride boulonnée située entre les compartiments 40 et 45 permet la manutention intégrale des assemblages combustible pendant les phases de rechargement du cœur. Le bloc formé par l'ensemble des compartiments 45 et 41, avec les échangeurs 49 fixés, est intégralement retiré pour accéder directement au cœur du réacteur pendant la phase de manutention. Le démontage de la bride boulonnée reliant les compartiments 45 et 41 a pour vocation d'accéder aux internes supérieurs du cœur, mécanismes de barres de commande, couronne de laminage de débit. Le pressuriseur associé au compartiment 41 et ses éléments internes peuvent également ainsi être dissociés du reste du bloc de cuve pour intervention et maintenance.

Les études réalisées par la Demanderesse prévoient des arrêts pour rechargement de combustible programmés en visite décennale, sans intervention sur le cœur entre ces périodes.

Au-dessus du cœur C, des tiges de commande 46 de grappe de contrôle permettent l'insertion de barres de contrôle 42 de la réactivité nucléaire, de manière similaire à ce que l'on rencontre usuellement dans les réacteurs REP classiques. Les barres de contrôle 42 sont des crayons en matériau absorbant neutronique.

Le volume libre au-dessus du cœur de réacteur C permet le positionnement complètement sorti des barres de contrôle 42, ainsi que la position en attente de crayons absorbants dits d'urgence, dédiés à l'arrêt de sûreté de la réaction nucléaire. Les tiges de commande 46 sont pilotées de façon verticale individuellement à l'aide des mécanismes de contrôle de barre 47. Au-dessus des mécanismes de contrôle 47, est fixée une plaque 48 à trous 480 qui permettent le passage du fluide primaire chaud en sortie du cœur dans la partie centrale appelée « riser ». Des trous périphériques permettent également le passage des barres de contrôle de la vanne de laminage 481.

A la périphérie de la plaque 48 est agencée une vanne de régulation 481 de débit de l'eau du circuit primaire appelée de laminage du débit. Cette vanne est sous la forme d'une couronne de laminage 481 qui épouse la périphérie intérieure du compartiment 42 de la cuve et s'étend sur une hauteur permettant de couvrir les ouvertures de sortie de l'eau primaire, ce qui permet de régler le débit de cette dernière primaire.

Cette vanne de laminage 481 a pour fonction de réguler le débit de circulation naturelle de l'eau du circuit primaire passant à travers les ouvertures 400 qui constituent les entrées des collecteurs d'eau primaire des échangeurs 49 entre circuit primaire et secondaire. La commande de positionnement de cette vanne de régulation est effectuée par un moteur ou mécanisme de contrôle de barre, avec la tige de commande 482 lié à la couronne 481, qui est avantageusement similaire à ceux utilisés par les tiges de commandes des barres de contrôle de réactivité 42.

Dans une position intermédiaire, comme illustré à la figure 7, la couronne de laminage 481 laisse partiellement dégagées les ouvertures 400 ce qui détermine le débit d'eau primaire qui y passe à travers vers les échangeurs 49.

En cas de panne électrique ou déclenchement d'arrêt d'urgence, la chute gravitaire des tiges de commande 46 déclenche également la chute gravitaire de la vanne de régulation du fluide primaire. Dans la position extrême basse, comme illustrée à la figure 8, cette vanne de régulation 481 laisse totalement passer l'eau du circuit primaire à travers les ouvertures 400, permettant ainsi de maximiser le débit dans les échangeurs 49, afin d'évacuer la puissance résiduelle et refroidir le circuit primaire. Ce fonctionnement par chute gravitaire de cette vanne de régulation, garantit une fiabilité et une sécurité en cas de perte électrique ou de panne du réacteur.

Dans le réacteur 4 des figures 5 et 6, en fonctionnement normal, la puissance thermique créée par la réaction nucléaire en chaîne au sein du cœur du réacteur est évacuée par le fluide du circuit primaire qui s'élève par convection naturelle de façon ascensionnelle, pour arriver dans la partie supérieure, où il peut alors s'écouler suivant les différentes ouvertures de sortie 400 correspondant aux collecteurs d'entrées des échangeurs 49 entre circuit primaire et secondaire et dans une portion centrale supérieure du cœur, sous la forme d'une cheminée. Cette cheminée centrale non détaillée, appelée riser, contient outre les mécanismes de pilotage des barres de contrôle, les capteurs d'instrumentations des paramètres du cœur.

Ainsi, l'enveloppe de séparation 44 du cœur C permet de séparer l'eau, fluide du circuit primaire, dans ses températures dites froide et chaude. Ainsi, l'eau primaire à température froide entoure le cœur C à l'intérieur de l'enveloppe 44, tandis que l'eau primaire à température chaude, échauffée en circulant de façon ascensionnelle dans le cœur C, se retrouve dans la portion centrale supérieure du cœur.

Au-dessus des ouvertures de sortie 400, au sein du réacteur 4, une plaque de séparation 7 sépare l'intérieur du dôme 41 de la cuve contenant un pressuriseur, du riser. Cette plaque de séparation 7 est une plaque à trous débouchant permettant d'assurer les fonctions d'isolement thermique et différences de pression du pressuriseur intégré. Cette plaque de séparation peut être du type de celle déjà décrite dans la demande de brevet WO2012/158929 A3.

La partie du-dessus intégrant le pressuriseur du réacteur sera détaillée plus loin en référence à la figure 11.

Après son refroidissement à travers les échangeurs 49 de manière descendante, l'eau du circuit primaire passe à travers les ouvertures 401 qui constituent les collecteurs de sorties d'eau primaire des échangeurs 49 puis retourne en circuit fermé vers la partie inférieure du cœur du réacteur pour une nouvelle phase d'échauffement. La circulation en circuit fermé P uniquement par convection naturelle de l'eau primaire est symbolisée par les flèches blanches en figure 6. La force motrice du circuit primaire en convection naturelle est pilotée par la différence de hauteur entre la position des échangeurs 49, et la hauteur moyenne de la zone fissile du cœur définie par les assemblages 42.

Comme déjà évoqué, le réglage des pertes de charge primaires et donc le débit sont réalisés par la vanne de laminage 481 dont les mécanismes de commande sont logés dans un des trous 480 de la plaque 48. La température d'entrée et de sortie de l'eau primaire se règle grâce aux conditions de flux neutronique c'est-à-dire de la puissance thermique du cœur, par les positions des barres de contrôle 42 de réactivité dans le cœur, et aux conditions de température et de pression de saturation dans le pressuriseur. Ici du fait de la circulation uniquement en convection naturelle, c'est-à-dire en l'absence de moyen actif de pompage d'eau primaire, c'est la vanne de laminage du débit d'eau primaire et les paramètres thermo hydrauliques (températures chaude et froide) qui fixent les conditions de circulation et d'échange entre circuits primaire et secondaire par rapport à la puissance produite en cœur. De fait, le pilotage du fonctionnement du réacteur calogène peut être réalisé simplement avec, en complément de ce réglage de pression d'eau primaire, le réglage de la puissance du cœur par l'ensemble des barres de contrôle 42.

Les échangeurs 49 entre circuit primaire et secondaire sont de préférence des échangeurs à plaques, avantageusement en acier inoxydable, et conçus pour résister à la pression de l'eau du circuit primaire. Avantageusement, ces échangeurs 49 sont fabriqués par empilement constitué de plaques métalliques rainurées assemblées entre elles soit par compression isostatique à chaud (CIC), soit par compression uniaxiale à chaud (CUC) de sorte à obtenir un soudage par diffusion entre les plaques métalliques, soit par brasage.

Au sein d'un échangeur 49, l'écoulement est descendant pour l'eau primaire, et ascendant pour l'eau secondaire.

Comme représenté en figure 6, le circuit secondaire de ce réacteur 4 n'est pas un circuit à boucle fermée comme dans les réacteurs REP classiques, mais comprend un bassin d'eau B, tel que schématisé à la figure 5. Ce bassin B est contenu dans l'espace du puits de cuve réacteur formant la troisième barrière de confinement, et la cuve de réacteur 4 y est immergée.

Ce circuit secondaire à bassin d'eau liquide B est un milieu ouvert délimité par le puits de cuve, sans pompe de circulation.

Avec un tel bassin d'eau liquide B pour le circuit secondaire, les échangeurs 49 ne sont pas intégrés à la cuve de réacteur 40, 41 mais agencés et fixés à l'extérieur de celle-ci. Un tel agencement est possible car l'éventualité improbable de rupture des tuyauteries d'entrée ou de sortie de l'eau primaire, provoquant alors une brèche de grand diamètre , n'a pas de conséquences accidentelles importantes pour le réacteur, grâce notamment aux pressions primaire et secondaire. En effet, le bassin d'eau liquide B enveloppe complètement la cuve de réacteur 4, et un accident de ce type ne peut conduire à un risque de dénoyage du cœur, mettant en danger l'intégrité physique du cœur du réacteur.

Le circuit interne au sein d'un échangeur 49 qui fait partie du circuit secondaire du réacteur 4 voit donc passer un débit d'eau liquide en tant que fluide secondaire qui s'échauffe au contact de l'eau primaire au sein de l'échangeur 49, par aspiration naturelle depuis son collecteur d'entrée 490 en bas vers leur collecteur de sortie 491 en haut de celui-ci. L'eau secondaire crée alors un volume supérieur à une température dite chaude. La couche de séparation entre une température dite froide et la température dite chaude d'eau secondaire est désignée sous la dénomination de thermocline, comme symbolisé sous la dénomination thermocline en figure 6.

Autrement dit, lorsque le réacteur SMR est en fonctionnement normal, le bassin d'eau B est configuré pour réaliser une stratification thermique verticale entraînant la formation d'une thermocline délimitée entre le bas du bassin à une température froide dans lequel la cuve de réacteur 4 est immergée et le haut du bassin à la température chaude. C'est la hauteur de la couche de thermocline qui va fixer le débit de refroidissement du circuit secondaire à travers les échangeurs 49. La circulation en circuit fermé S uniquement par convection naturelle de l'eau secondaire est symbolisée par les flèches en gris en figure 6.

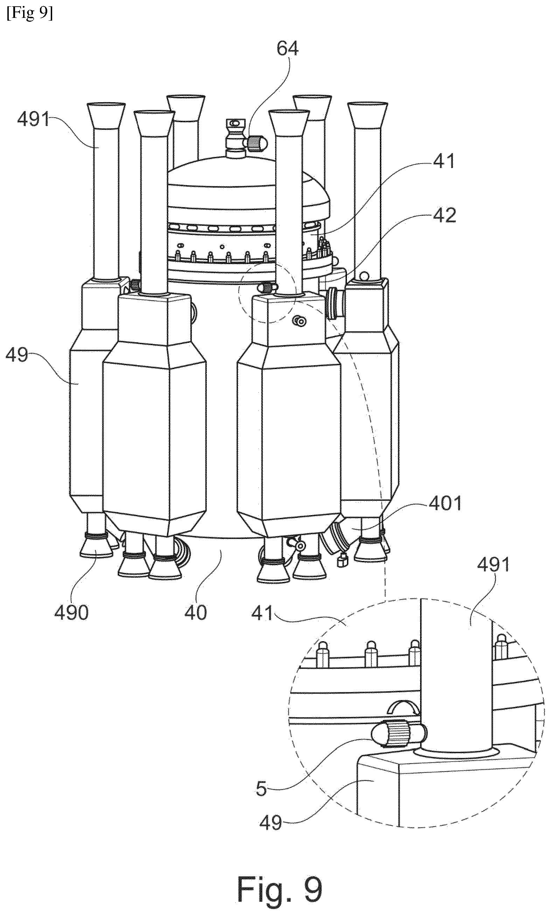

Le débit par convection naturelle de l'eau secondaire se règle par des vannes de régulation 5 intégrées dans chacun des collecteurs de sortie 491 des échangeurs 49, comme illustrées à la figure 9. La température froide d'eau secondaire est régie par les conditions de température du bassin B d'eau secondaire. La température chaude est fixée par les vannes de régulation 5 dans les collecteurs de sortie 491, et par l'échange thermique au sein même des échangeurs 49.

Un exemple d'intégration d'une vanne de régulation 5 sous la forme d'une vanne 5 à papillon 50 dans un collecteur de sortie 491 est montrée aux figures 10A, 10B, 10C qui montrent la vanne dans une position respectivement complètement ouverte dans laquelle le maximum de débit d'eau secondaire du bassin peut passer, intermédiaire, et une complètement fermée dans laquelle aucun débit ne peut passer. Le papillon 5 est entrainé en rotation par l'arbre de sortie 51 d'un moteur électrique 52.

Avantageusement, l'extrémité de l'arbre 51 opposée à celle liée au papillon 50 est liée à une masselotte déportée 53. Comme montré en figure 10A, en cas de panne électrique ou déclenchement d'arrêt d'urgence, la chute gravitaire de la masselotte 53 met la vanne 5 dans sa position complètement ouverte de sorte à faire circuler le débit maximal d'eau secondaire du bassin B.

En phase de démarrage du réacteur nucléaire, la thermocline est totalement confondue avec le niveau libre supérieur du bassin d'eau secondaire B. La hauteur motrice de circulation d'eau secondaire est alors maximale du fait du poids maximal de la colonne d'eau froide alimentant les entrées des échangeurs 49. L'appel de puissance thermique vers le circuit primaire est alors maximal, et la température moyenne de l'eau primaire baisse. L'abaissement de la température de l'eau primaire conduit à un refroidissement moyen du modérateur dans le cœur, induisant de fait une augmentation de la réactivité du cœur, et donc une augmentation de sa puissance thermique. Des conditions maximales de chauffage thermique du volume d'eau secondaire sont accompagnées d'une augmentation naturelle de la puissance du cœur, le réacteur 4 est donc naturellement stable. Comme déjà évoqué, la position de la vanne de laminage d'eau primaire, combinée aux positions de barres de pilotage 42 de la réactivité permet toutefois de limiter l'augmentation de la réactivité du cœur, pour rester dans la gamme de montée en température de l'ensemble du bloc réacteur 4 et de son puits de cuve.

A contrario, lorsque la thermocline baisse de niveau, cela implique une élévation de la couche d'eau chaude secondaire, et donc une baisse de la hauteur motrice d'eau secondaire à travers les échangeurs 49 puisque la hauteur de colonne d'eau froide diminue. Alors, la circulation d'eau secondaire par convection naturelle diminue, diminuant de fait l'échange thermique entre circuits primaire et secondaire. Dans le cœur C, la baisse de l'évacuation de puissance conduit à une élévation de la température moyenne de l'eau primaire, et donc à une élévation de la température moyenne du modérateur dans le cœur. Il y a donc de fait une baisse de la réactivité par dilatation du modérateur, et la puissance neutronique et thermique produite baisse. Le réacteur est donc naturellement stable pour l'évacuation et le stockage thermique vers le volume d'eau secondaire défini par le bassin B. Typiquement, une différence d'altitude entre le plan médian du cœur C et le plan médian des échangeurs 49 d'environ 4 mètres permet l'élaboration de la circulation naturelle d'un fluide primaire froid à 80°C en sortie d'échangeur 49, et chaud à 120°C en sortie du cœur C, en générant environ 1100 Pascal de pression motrice nécessaire pour vaincre les pertes de charge du cœur C, des échangeurs 49, et le reste du circuit primaire incluant la perte de charge additionnelle réglable formée par la couronne de laminage 480.

Le volume d'eau secondaire est dimensionné par les dimensions du puits de cuve d'une part et par la hauteur dédiée aux zones froide et chaude de l'eau secondaire d'autre part. Typiquement, les volumes d'eau secondaire sont de l'ordre de 200 à 300 m³ pour la zone froide, et de 100 à 150 m³ pour la zone chaude, soit un volume total pour le bassin B compris entre 300 et 450 m³. Typiquement, une différence d'altitude d'environ 4 mètres entre le plan médian des échangeurs 49 et la position de la thermocline secondaire séparant une couche d'eau froide secondaire à 65°C de la couche d'eau chaude à 105°C permet l'élaboration de la circulation naturelle d'un fluide secondaire froid à 65°C en entrée d'échangeur 490, et chaud à 105°C en sortie d'échangeur 491, en générant environ 1000 Pascal de pression motrice nécessaire pour vaincre les pertes de charge dues à la traversée des échangeurs 49, depuis l'aspiration 490 jusqu'à la sortie 491, en incluant les pertes de charge réglables à l'aide des vannes de régulation de débit secondaire 5.

La position de la thermocline ne peut être maintenue à une position fixée qu'à la condition qu'il y ait un prélèvement continu d'une quantité de l'eau secondaire à sa température chaude et un remplacement par la même quantité d'eau secondaire à sa température froide. Il existe donc un système de pompage réglable permettant de transporter, vers un réseau de chaleur, la puissance correspondant à la demande du client, c'est-à-dire requise par le réseau de chaleur. En cas d'arrêt intempestif de cette évacuation de chaleur, ou d'arrêt fortuit du système de pompage, les conditions de stabilité décrites précédemment permettent de stocker temporairement la puissance produite par le cœur du réacteur en modifiant le rapport entre l'eau secondaire à sa température froide et à sa température chaude, et en abaissant le niveau de la thermocline. Au bout de plusieurs minutes de fonctionnement, l'évacuation continue de la puissance thermique produite par le réacteur sans échappatoire externe, conduit à provoquer l'arrêt du réacteur, pour évacuer seulement la puissance résiduelle, à travers des systèmes d'évacuation de puissance résiduelle spécifiquement dédiés. Typiquement, une puissance continue de 20 MW thermique, avec une fourniture d'eau secondaire à 90°C et un retour à 45°C, exige un pompage de 123 litres par seconde, ou 442 m³ par heure depuis la couche d'eau chaude au-dessus de la thermocline et un retour de la même quantité en fond de puits de cuve. Préférentiellement, cette évacuation et ce retour peuvent être mis en œuvre au moyen d'une tuyauterie provenant de la partie supérieure du puits de cuve, afin d'éviter des connexions latérales susceptibles de provoquer des fuites ou des problèmes de tenue mécanique latérale contraignant la dilatation ou la résistance au séisme.

Le transfert thermique de 20 MW thermique depuis la couche d'eau secondaire pompée vers le circuit d'eau tertiaire du réseau client s'effectue au moyen d'un ou plusieurs échangeurs thermiques dimensionnés pour transférer 20MW thermique avec un pincement chaud de 15°C (de 105°C à 90°C) et un pincement froid de 20°C (de 65 °C à 45°C). Le pompage de cette eau secondaire s'effectue à l'aide de groupes de pompage, préférentiellement installés en parallèle, afin de pouvoir disposer d'une redondance de fonctionnement en cas de panne ou de besoin d'intervention.

La présence de cette tuyauterie ne doit pas nuire au transport de l'ensemble du bloc réacteur, comme détaillé par la suite pour sa sortie du puits de cuve à l'aide des moyens de manutention lourds.

Comme précisé précédemment, le circuit primaire du réacteur fonctionne uniquement par convection naturelle, c'est-à-dire sans groupe de pompage.

Par conséquent, les inventeurs ont été confrontés à une problématique de réalisation d'un pressuriseur dont la partie de refroidissement et condensation des vapeurs du fluide primaire ne peut pas être conçue avec un dispositif d'aspersion/d'injection d'eau liquide, à partir d'un prélèvement du circuit primaire comme selon l'état de l'art.

Les inventeurs ont alors pensé à moduler les pertes thermiques par conduction à travers le dôme 6, pour contrôler la dépressurisation de la vapeur primaire du pressuriseur, en mettant à profit le fait que l'enveloppe métallique 60 du couvercle 41 est de faible épaisseur, typiquement comprise entre 10 et 20 mm.

Ainsi, comme illustré à la figure 11, la partie de refroidissement et de condensation de la vapeur comprend un dôme 6 à double-paroi 60, 61 distantes l'une de l'autre en formant un espace E à l'intérieur duquel peut circuler de l'eau liquide du bassin B depuis le bas vers le haut du dôme formant une cheminée d'évacuation centrale 62. Typiquement, l'espace E a une hauteur constante de l'ordre de 0,5 à 2 cm.

En fonctionnement normal, le niveau de la thermocline est fixé suffisamment au-dessus du pressuriseur, notamment de manière à se situer au-dessus de la cheminée d'évacuation centrale 62, comme illustré sur la figure 11.

Ainsi, comme illustré à la figure 11, l'eau liquide qui circule ainsi uniquement par convection naturelle dans l'espace E délimité par les deux parois 60, 61, depuis une température froide en-dessous de la thermocline, va condenser la vapeur saturante du circuit primaire à l'intérieur de la cuve et ainsi diminuer la pression au sein de la cuve. Typiquement la température froide d'eau liquide pénétrant dans l'espace E en bas du dôme 6 est autour de 65°C, ce qui permet un refroidissement efficace et rapide du dôme 6, et en particulier de la paroi interne 60 formant l'enceinte de résistance mécanique à la pression du circuit primaire, et par-là de la vapeur d'eau primaire qui y est sous-jacente, et à une température de saturation de la pression primaire autour de 3.5 bar, soit environ 140 °C. Typiquement, un tel dispositif permet d'extraire par circulation naturelle de l'ordre de 0.3 MW thermique, et condenser ainsi environ 0.15 kg/s de vapeur à saturation. L'inventaire de vapeur à saturation dans le pressuriseur, en fonctionnement normal, est de l'ordre de quelques kilogrammes, en fonction du volume du pressuriseur requis. La puissance de dépressurisation primaire est donc tout à fait compatible avec les requis de contrôle de la pression primaire.

La cheminée centrale 62 intègre en son sein une vanne de régulation 64 ou autrement dit de laminage qui permet de régler le débit d'eau liquide secondaire qui circule dans l'espace E et donc de réguler le refroidissement liquide en tant que tel. En effet, dans une position de fermeture totale de la vanne 64, la couche d'eau est piégée et stratifiée dans l'espace E. A contrario, dans une position d'ouverture, notamment totale, de la vanne 64, l'eau chaude monte naturellement dans l'espace E puis à travers la cheminée centrale 62 et va rejoindre la couche d'eau chaude supérieure du bassin B, tandis que l'eau froide du bassin B est aspirée par l'entrée en position basse de la double paroi 60, 61.

La vanne 64 peut être une vanne à papillon comme la vanne 5 du débit secondaire illustrée aux figures 10A, 10B, 10C.

Les deux parois 60, 61 du dôme 6 sont métalliques, de préférence en acier inoxydable.

La paroi externe 61 du dôme 6 est avantageusement recouverte d'une coiffe 63 logeant en son sein un isolant thermique pour empêcher le refroidissement du dôme lorsque la vanne 64 est en position fermée.

Selon une variante avantageuse, le réacteur 4 comprend, en tant que dissipateur thermique passif, une pluralité d'ailettes de refroidissement 65 agencées à l'intérieur de la paroi interne, en étant réparties de préférence uniformément sur la surface de cette dernière, de préférence en étant soudées ou brasées. Ces ailettes de refroidissement augmentent les surfaces verticales de condensation à l'intérieur du pressuriseur, permettant ainsi un meilleur écoulement gravitaire du film de condensat de vapeur. Par-là, on maintient un débit de condensation important de la vapeur primaire, par élimination et remplacement du film liquide créé en surface froide.

Ces ailettes 65 augmentent aussi la surface totale de contact avec la vapeur du circuit primaire et donc permettent d'améliorer l'échange thermique par conduction entre ladite vapeur et le dôme 5. Dans l'exemple illustré, ces ailettes 65 sont rectilignes et s'étendent sur une majeure partie de la hauteur du dôme. Ces ailettes 65 sont de préférence dans le même matériau que les parois 60, 61 du dôme 6, et typiquement d'une épaisseur de quelques cm et d'une longueur de quelques dizaines de cm le long à l'intérieur de la paroi 60.

Par ailleurs, la partie de chauffage du pressuriseur comprend une pluralité de résistances électriques 8 enveloppées dans un isolant électrique et alimentées par des câbles électriques, agencées à l'intérieur du dôme, de préférence sur la plaque de séparation 7 qui en son centre comprend une portion à trous 70 permettant d'assurer les fonctions d'isolation thermique et différence de pressions du pressuriseur intégré. Une telle portion à trous 70 est par exemple comme selon le dispositif décrit dans la demande brevet WO 2012/158929A3.

Les résistances électriques 8 peuvent être du type de celles décrites dans le brevet US4135552.

L'invention n'est pas limitée aux exemples qui viennent d'être décrits ; on peut notamment combiner entre elles des caractéristiques des exemples illustrés au sein de variantes non illustrées.

D'autres variantes et modes de réalisation peuvent être envisagés sans pour autant sortir du cadre de l'invention comme définie par les revendications.

### Liste des références citées

[1]: The World Nuclear Industry Status Report 2017. https://www.worldnuclearreport.org/IMG/pdf/20170912wnisr2017-en-lr.pdf

## Revendications

1. Réacteur (4) à eau pressurisée (REP), de type réacteur modulaire (SMR) comprenant:
- une cuve de réacteur d'axe central (X) comprenant un couvercle (41) sous la forme d'un dôme (6) et logeant au moins une partie du circuit primaire ;
- un pressuriseur du circuit primaire dont la partie de refroidissement et de condensation de la vapeur comprend:
• deux parois (60, 61) du dôme, distantes l'une de l'autre en formant un espace (E) étanche par rapport au circuit primaire et à l'intérieur duquel peut circuler de l'eau de refroidissement sous forme liquide depuis le bas vers le haut du dôme formant une cheminée d'évacuation centrale (62) vers l'extérieur de la cuve et du dôme, de sorte à condenser la vapeur à l'état de saturation du circuit primaire à l'intérieur de la cuve et ainsi diminuer la pression au sein de la cuve ;
• une vanne de régulation (64) du débit d'eau liquide circulant dans l'espace, agencée dans la cheminée d'évacuation centrale.

2. Réacteur selon la revendication 1, les deux parois du dôme étant métalliques, de préférence en acier inoxydable.

3. Réacteur selon la revendication 1 ou 2, la paroi interne (60) du dôme formant l'enceinte de résistance mécanique à la pression du circuit primaire.

4. Réacteur selon la revendication 3, l'épaisseur de la paroi interne étant comprise entre 10 et 20 mm.

5. Réacteur selon l'une des revendications précédentes, comprenant un dissipateur thermique passif agencé à l'intérieur du dôme pour refroidir la vapeur du circuit primaire.

6. Réacteur selon la revendication 5, le dissipateur thermique comprenant une pluralité d'ailettes (65) de refroidissement agencées à l'intérieur de la paroi interne, en étant réparties de préférence uniformément sur la surface de cette dernière.

7. Réacteur selon la revendication 6, les ailettes étant soudées ou brasées à la paroi interne du dôme.

8. Réacteur selon l'une des revendications précédentes, l'espace entre parois interne et externe du dôme étant compris entre 0,5 et 5 cm.

9. Réacteur selon l'une des revendications précédentes, la paroi externe du dôme étant recouverte d'une coiffe (63) logeant en son sein un isolant thermique.

10. Réacteur selon l'une des revendications précédentes, l'eau liquide du pressuriseur destinée à circuler entre les deux parois du dôme étant inférieure d'au moins 10°C à la température d'eau liquide du circuit primaire.

11. Réacteur selon l'une des revendications précédentes, la partie de chauffage du pressuriseur comprenant une pluralité de résistances électriques (8) enveloppées dans un isolant électrique, agencées à l'intérieur du dôme.

12. Réacteur selon l'une des revendications précédentes, comprenant un circuit d'eau secondaire, l'eau liquide destinée à circuler entre les deux parois du dôme étant l'eau du circuit secondaire du réacteur.

13. Réacteur selon l'une des revendications précédentes, comprenant un circuit d'eau secondaire comprenant un bassin (B) rempli d'eau, contenu dans l'espace du puits de la cuve de réacteur et alimentant le bas de l'espace entre les parois du dôme.

14. Réacteur selon la revendication 13, le bassin d'eau étant configuré pour, lorsque le réacteur SMR est en fonctionnement normal, réaliser une stratification thermique verticale entraînant la formation d'une thermocline délimitée entre le bas du bassin à une température dite froide dans lequel la cuve de réacteur SMR est immergé et le haut du bassin à une température dite chaude, la thermocline étant positionnée au-dessus du dôme de sorte que la circulation de l'eau liquide depuis le bassin dans l'espace entre parois du pressuriseur est réalisée par convection naturelle.

15. Installation nucléaire comprenant au moins un réacteur nucléaire SMR selon l'une des revendications précédentes.

## Patentansprüche

1. Druckwasserreaktor (REP) (4) des Typs modularer Reaktor (SMR), umfassend:
- einen Reaktorbehälter mit einer Mittelachse (X), der einen Deckel (41) in Form einer Kuppel (6) umfasst und mindestens einen Teil des Primärkreislaufs aufnimmt;
- einen Druckerzeuger des Primärkreislaufs, dessen Kühl- und Kondensationsteil des Dampfs Folgendes umfasst:
• zwei Wände (60, 61) der Kuppel, die voneinander beabstandet sind und einen abgedichteten Raum (E) in Bezug auf den Primärkreislauf bilden und innerhalb dessen Kühlwasser in flüssiger Form vom Boden zur Oberseite der Kuppel zirkulieren kann, wodurch ein zentraler Ablasskanal(62) zur Außenseite des Behälters und der Kuppel gebildet wird, um den Dampf im Sättigungszustand des Primärkreislaufs innerhalb des Behälters zu kondensieren und somit den Druck innerhalb des Behälters zu verringern;
• ein im zentralen Ablasskanal angeordnetes Ventil (64), das den im Raum zirkulierenden Flüssigkeitswasserstrom reguliert.

2. Reaktor nach Anspruch 1, wobei die beiden Wände der Kuppel metallisch, vorzugsweise aus Edelstahl sind.

3. Reaktor nach Anspruch 1 oder 2, wobei die Innenwand (60) der Kuppel das Gehäuse für einen mechanischen Widerstand gegen den Druck des Primärkreislaufs bildet.

4. Reaktor nach Anspruch 3, wobei die Dicke der Innenwand zwischen 10 und 20 mm beträgt.

5. Reaktor nach einem der vorhergehenden Ansprüche, umfassend einen passiven Kühlkörper, der innerhalb der Kuppel angeordnet ist, um den Dampf des Primärkreislaufs zu kühlen.

6. Reaktor nach Anspruch 5, wobei der Kühlkörper mehrere Kühlrippen (65) umfasst, die innerhalb der Innenwand angeordnet sind, wobei sie vorzugsweise gleichmäßig über deren Oberfläche verteilt sind.

7. Reaktor nach Anspruch 6, wobei die Rippen mit der Innenwand der Kuppel verschweißt oder verlötet sind.

8. Reaktor nach einem der vorhergehenden Ansprüche, wobei der Raum zwischen Innen- und Außenwand der Kuppel zwischen 0,5 und 5 cm beträgt.

9. Reaktor nach einem der vorhergehenden Ansprüche, wobei die Außenwand der Kuppel mit einer Kappe (63) abgedeckt ist, in der ein Wärmeisolator aufgenommen ist.

10. Reaktor nach einem der vorhergehenden Ansprüche, wobei das zum Zirkulieren zwischen den beiden Wänden der Kuppel vorgesehene flüssige Wasser des Druckerzeugers mindestens 10° C kälter ist als die Flüssigwassertemperatur des Primärkreislaufs.

11. Reaktor nach einem der vorhergehenden Ansprüche, wobei der Heizteil des Druckerzeugers mehrere in einem elektrischen Isolator umhüllte elektrische Widerstände (8) umfasst, die innerhalb der Kuppel angeordnet sind.

12. Reaktor nach einem der vorhergehenden Ansprüche, umfassend einen Sekundärwasserkreislauf, wobei das flüssige Wasser, das zwischen den beiden Wänden der Kuppel zirkulieren soll, das Wasser des Sekundärkreislaufs des Reaktors ist.

13. Reaktor nach einem der vorhergehenden Ansprüche, umfassend einen Sekundärwasserkreislauf, der ein mit Wasser gefülltes Becken (B) umfasst, das in dem Raum des Schachts des Reaktorbehälters enthalten ist und den Boden des Raumes zwischen den Wänden der Kuppel versorgt.

14. Reaktor nach Anspruch 13, wobei das Wasserbecken dazu ausgelegt ist, dann, wenn sich der SMR-Reaktor im Normalbetrieb befindet, eine vertikale thermische Schichtung zu realisieren, die zur Bildung einer Thermokline führt, die zwischen dem Boden des Beckens bei einer so genannten kalten Temperatur, in das der SMR-Reaktorbehälter eingetaucht ist, und der Oberseite des Beckens bei einer so genannten heißen Temperatur begrenzt ist, wobei die Thermokline oberhalb der Kuppel angeordnet ist, so dass die Zirkulation von flüssigem Wasser aus dem Becken in den Raum zwischen den Wänden des Druckerzeugers durch natürliche Konvektion realisiert wird.

15. Nuklearanlage mit mindestens einem SMR-Nuklearreaktor nach einem der vorhergehenden Ansprüche.

## Claims

1. Pressurized water reactor (PWR) (4) of the modular reactor (SMR) type, comprising:
- a reactor vessel of central axis (X), comprising a cover (41) in the form of a dome (6) and accommodating at least a portion of the primary circuit;
- a pressurizer of the primary circuit, the steam cooling and condensing portion of which comprises:
• two walls (60, 61) of the dome, spaced apart from each other and thus forming a space (E) which is sealed with respect to the primary circuit and inside which cooling water in liquid form can flow from the bottom to the top of the dome forming a central discharge chimney (62) to the outside of the vessel and dome, in such a way as to condense the saturated steam of the primary circuit inside the vessel and thus reduce the pressure inside the vessel;
• a control valve (64) for controlling the flow of liquid water flowing through the space, the control valve being arranged in the central discharge chimney.

2. Reactor according to Claim 1, the two walls of the dome being metallic, preferably made of stainless steel.

3. Reactor according to Claim 1 or 2, the inner wall (60) of the dome forming the enclosure that mechanically withstands the pressure in the primary circuit.

4. Reactor according to Claim 3, the thickness of the inner wall being comprised between 10 and 20 mm.

5. Reactor according to one of the preceding claims, comprising a passive heat sink arranged inside the dome for cooling the steam of the primary circuit.

6. Reactor according to Claim 5, the heat sink comprising a plurality of cooling fins (65) arranged inside the inner wall, preferably being evenly distributed over the surface thereof.

7. Reactor according to Claim 6, the fins being welded or brazed to the inner wall of the dome.

8. Reactor according to one of the preceding claims, the space between inner and outer walls of the dome being comprised between 0.5 and 5 cm.

9. Reactor according to one of the preceding claims, the outer wall of the dome being covered by a cap (63) which accommodates a thermal insulator within it.

10. Reactor according to one of the preceding claims, the liquid water of the pressurizer that is intended to flow between the two walls of the dome being at least 10°C lower than the temperature of liquid water of the primary circuit.

11. Reactor according to one of the preceding claims, the heating portion of the pressurizer comprising a plurality of electrical resistors (8) encased in an electrical insulator and arranged inside the dome.

12. Reactor according to one of the preceding claims, comprising a secondary water circuit, the liquid water that is intended to flow between the two walls of the dome being the water of the secondary circuit of the reactor.

13. Reactor according to one of the preceding claims, comprising a secondary water circuit which comprises a tank (B) filled with water, contained in the space of the pit of the reactor vessel and feeding the bottom of the space between the walls of the dome.

14. Reactor according to Claim 13, the water tank being configured to, when the SMR reactor is operating normally, implement a vertical thermal stratification resulting in the formation of a thermocline that is delimited between the bottom of the tank at what is referred to as a cold temperature in which the SMR reactor vessel is immersed and the top of the tank at what is referred to as a hot temperature, the thermocline being positioned above the dome in such a way that the liquid water flows from the tank into the space between walls of the pressurizer by natural convection.

15. Nuclear installation comprising at least one SMR nuclear reactor according to one of the preceding claims.
